# EUROPEAN PATENT APPLICATION

(11) **EP 4 851 020 A1**
(43) Date of publication of application: **09.12.2026**
(21) Application number: 26183628.2
(22) Date of filing: 08.06.2026
(51) Int. Cl.: B62D 25/04, B62D 29/00

(54) **VEHICLE FRAME COMPONENT**

(30) Priority: 06.06.2025 GB 202508933
(71) Applicant: Jaguar Land Rover Limited, Coventry CV3 4LF (GB)
(72) Inventor: Lakic, Alex, Coventry, CV3 4LF (GB); Tiganu, Ionel, Coventry, CV3 4LF (GB)
(74) Representative: Jaguar Land Rover Patents Department

(57) **Abstract**

Aspects and embodiments of the invention relate to a pillar (15, 17, 29, 31, 33, 35, 43, 45) for a vehicle (1), a body structure (3) for a vehicle (1), a vehicle (1), and a method (200) of fabricating the pillar. The pillar comprises: a first mounting portion (101) for mounting the pillar to a roof structure (27) of the vehicle (1); a second mounting portion (103) for mounting the pillar to a lower body structure (49) of the vehicle (1); and a monolithic beam (105) spanning between the first and second mounting portions (101, 103), wherein the monolithic beam (105) has an I-shaped cross-section (107) along at least a portion of its length.

## Description

### TECHNICAL FIELD

The present disclosure relates to a vehicle frame component, such as a pillar for a vehicle. Aspects of the invention relate to a pillar for a vehicle, a body structure for a vehicle, a vehicle, and a method of fabricating the pillar.

### BACKGROUND

It is known to construct vehicle frame components from multiple sheet-metal stampings, which involves a large number of components and process steps with high embedded carbon dioxide and material excess.

It is an aim of the present invention to address one or more of the disadvantages associated with the prior art.

### SUMMARY OF THE INVENTION

Aspects and embodiments of the invention provide a pillar for a vehicle, a body structure for a vehicle, a vehicle, and a method of fabricating the pillar as claimed in the appended claims.

According to an aspect of the present invention there is provided a pillar for a vehicle comprising: a first mounting portion for mounting the pillar to a roof structure of the vehicle; a second mounting portion for mounting the pillar to a lower body structure of the vehicle; and a monolithic beam spanning between the first and second mounting portions, wherein the monolithic beam has an I-shaped cross-section along at least a portion of its length.

By spanning between the mounting portions with a monolithic beam, rather than a box section fabricated from multiple sheet-metal stampings, for example, the number of parts, assembly operations, and associated logistics and tooling are reduced. The I-shaped cross-section provides an efficient shape in terms of mass to bending stiffness for pillars, which are predominantly loaded by unidirectional impacts. Therefore, providing the monolithic beam with an I-shaped cross-section along at least a portion of its length enables competitive or better mass and bending stiffness compared with box sections fabricated from multiple sheet-metal stampings.

Optionally, the monolithic beam has an I-shaped cross-section along a majority of its length.

Optionally, a cross section of the monolithic beam in a portion adjacent the second mounting portion is not I-shaped.

Optionally, a cross section of the monolithic beam transitions from I-shaped to not I-shaped via divergence of a first flange from a first side of the monolithic beam and convergence of the first flange onto a second flange at a second side of the monolithic beam.

This transition in cross-sectional shape induces more controlled bending at the base of the pillar where it is expected that the greatest bending loads will be concentrated, and thus avoids fracture under those loads.

Optionally, the mounting portions are configured to mount the pillar to the vehicle with a web of the I-shaped cross-section oriented in an inboard-outboard direction of the vehicle.

This may ensure that most bending loads from external impacts will be directed into hardway bending and thus better resisted.

Optionally, the portion of the monolithic beam having the I-shaped cross section comprises a curve about an axis normal to the web, and wherein the mounting portions are configured to mount the pillar to the vehicle with a convex side of said curve facing outboard of the vehicle.

This may enable a wider lower body structure to provide greater space for occupants, suspension, powertrains, and the like alongside a narrower greenhouse/glasshouse to minimise the vehicle frontal cross-sectional area for drag reduction.

Optionally, the monolithic beam is a forged part.

Forging can produce strength and ductility which is competitive or better than sheet-metal stampings.

Optionally, the first and/or second mounting portions are integrally formed with the monolithic beam.

This may further reduce the number of parts, assembly operations, and associated logistics and tooling.

Optionally, the monolithic beam comprises one or more integrally formed reinforcement structures at one or more mounting locations for connecting assemblies.

This too may further reduce the number of parts, assembly operations, and associated logistics and tooling.

Optionally, at least one integrally formed reinforcement structure comprises a portion of a web of the I-shaped cross-section with increased thickness.

Optionally, a depth of the monolithic beam tapers towards the first mounting portion and/or tapers towards the second mounting portion.

This may induce more controlled bending near the mounting portions where it is expected that greater bending loads will be concentrated, and thus may avoid fracture under those loads.

The pillar may be a B-pillar, the roof structure may be a cantrail, and the lower body structure may be a sill.

According to another aspect of the present invention there is provided a body structure for a vehicle comprising the pillar.

According to another aspect of the present invention there is provided a vehicle comprising the pillar.

According to another aspect of the present invention there is provided a method of fabricating the pillar, comprising a single forging.

According to a further aspect of the present invention there is provided a cross member for a vehicle comprising: a first mounting portion for mounting the cross member to a first laterally-disposed frame component of the vehicle; a second mounting portion for mounting the cross member to a second laterally-disposed longitudinal frame component of the vehicle, the first and second laterally-disposed frame components being disposed on different lateral sides of the vehicle; and a monolithic beam spanning between the first and second mounting portions, wherein the monolithic beam has an I-shaped cross-section along at least a portion of its length.

According to a further aspect of the present invention there is provided a first frame component for an automobile comprising: a first mounting portion for mounting the first frame component to a second frame component of the automobile; a second mounting portion for mounting the first frame component to a third frame component of the automobile; and a monolithic beam spanning between the first and second mounting portions, wherein the monolithic beam has an I-shaped cross-section along at least a portion of its length.

Within the scope of this application it is expressly intended that the various aspects, embodiments, examples and alternatives set out in the preceding paragraphs, in the claims and/or in the following description and drawings, and in particular the individual features thereof, may be taken independently or in any combination that falls within the scope of the appended claims. That is, all embodiments and/or features of any embodiment can be combined in any way and/or combination that falls within the scope of the appended claims, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIG. 1 illustrates an example of a vehicle;
FIG. 2 illustrates an example of a body structure for a vehicle;
FIG. 3 illustrates an example of a box section for a vehicle frame component;
FIG. 4 illustrates an example of an integrative casting for a vehicle frame component;
FIG.s 5A-5G illustrate an example of a B-pillar of a vehicle frame component;
FIG.s 6A-6G illustrate an example of a transition into a first mounting portion;
FIG.s 7A-7G illustrate an example of a transition into a second mounting portion; and
FIG. 8 illustrates an example of a method of fabricating a vehicle frame component.

### DETAILED DESCRIPTION

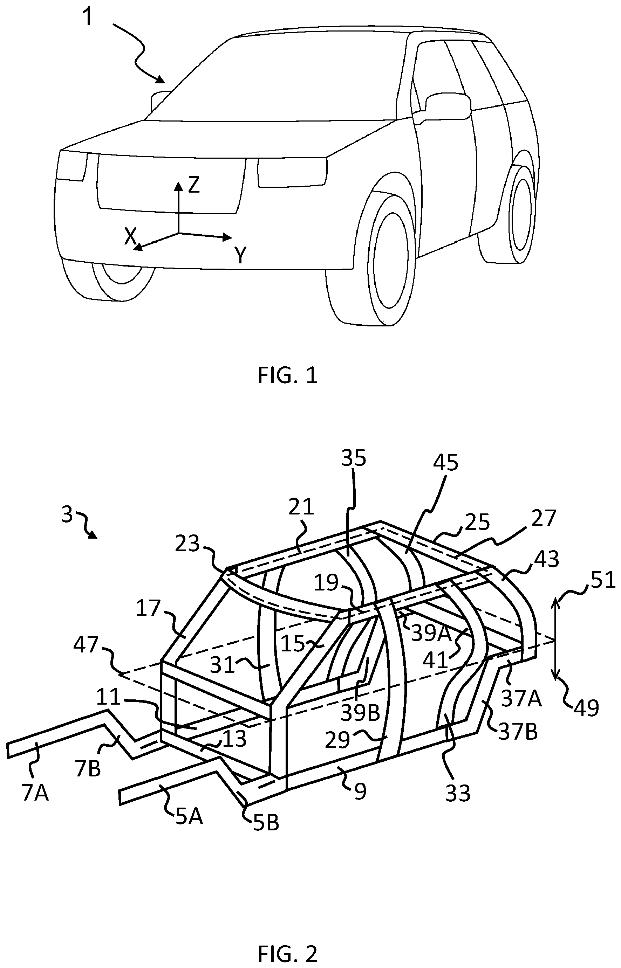

A vehicle 1 in accordance with an embodiment of the present invention is described herein with reference to the accompanying FIG. 1. In some but not necessarily all examples, the vehicle 1 is a passenger vehicle, also referred to as a passenger car or as an automobile. In some other but not necessarily all other examples, embodiments of the invention can be implemented for other applications, such as commercial vehicles.

FIG. 1 is a front perspective view and illustrates a longitudinal X-axis between the front and rear of the vehicle 1 representing a centreline, an orthogonal lateral Y-axis between left and right lateral sides of the vehicle 1, and a vertical Z-axis. A forward/fore direction typically faced by a driver's seat is in the positive X-direction; rearward/aft is -X. A leftward direction as seen from the driver's seat is in the positive Y-direction; rightward is -Y. These are a first lateral direction and a second lateral direction.

FIG. 2 illustrates an example body structure 3 of the vehicle 1. The body structure is sometime alternatively referred to as a bodyshell or a Body in White (BIW). The body structure 3 is simplified for clarity and conciseness and certain frame components may be omitted. For example, exterior body panels are omitted.

The body structure 3 comprises at least the following frame components: left front rail 5A, 5B; right front rail 7A, 7B; left sill 9; right sill 11; cross member 13; left A-pillar 15; right A-pillar 17; left cantrail 19; right cantrail 21; front header 23; rear header 25; left B-pillar 29; right B-pillar 31; left C-pillar 33; right C-pillar 35; left rear rail 37A, 37B; right rear rail 39A, 39B; rear cross member 41; and optionally left and right D-pillars 43, 45.

The left and right front rails comprise respective longitudinal members 5A, 7A and respective cranked members 5B, 7B, sometimes referred to as S-shaped or swan-necked, which are configured to provide a cranked offset load path through which to divert frontal impact energy from the longitudinal members 5A, 7A into respective sills 9, 11.

The left and right rear rails comprise respective longitudinal members 37A, 39A and respective cranked members 37B, 39B, sometimes referred to as S-shaped or swan-necked, which are configured to provide a cranked offset load path through which to divert rear impact energy from the longitudinal members 37A, 39A into respective sills 9, 11.

The cross member 13, sometimes called the bulkhead crossmember, the engine bay crossmember, or the dash crossmember, spans between the left and right side structures, in particular between the left front rail 5A, 5B and right front rail 7A, 7B and/or between lower sections of the left A-pillar 15 and right A-pillar 17. The cross member 13 is configured to resist deformation of a front bulkhead of the vehicle's cabin, due to the rearward excursion of large stiff items such as, for example engines or electric drive motors, in frontal impacts. The cross member 13 may also be configured as a transverse torsion brace that contributes to the overall torsional stiffness of the body structure 3.

The front header 23, left and right cantrails 19, 21, and rear header 25 form a roof structure 27 for the vehicle 1. The roof structure 27 is part of the vehicle's greenhouse 51 (sometimes alternatively called the vehicle's glasshouse), which extends down to the vehicle's beltline 47. The beltline 47 represents the bottom edge of the vehicle's glass panels. Everything below the beltline 47 is considered to be part of a lower body structure 49.

The left front rail 5A, 5B, right front rail 7A, 7B, left sill 9, right sill 11, cross member 13, left rear rail 37A, 37B, right rear rail 39A, 39B, and rear cross member 41 are all part of the lower body structure 49.

The roof structure 27 and lower body structure 49 are connected by pillars. The A-pillars 15, 17 span between the front rails 5A, 5B, 7A, 7B or the sills 9, 11 and the cantrails 19, 21 or the front header 23. The B-pillars 29, 31 span between the sills 9, 11 and the cantrails 19, 21. The C-pillars 33, 35 span between the rear rails 37A, 37B, 39A, 39B or the sills 9, 11 and the cantrails 19, 21 or the rear header 25. If D-pillars 43, 45 are present they may span between the rear rails 37A, 37B, 39A, 39B or rear cross member 41 and the cantrails 19, 21 or the rear header 25.

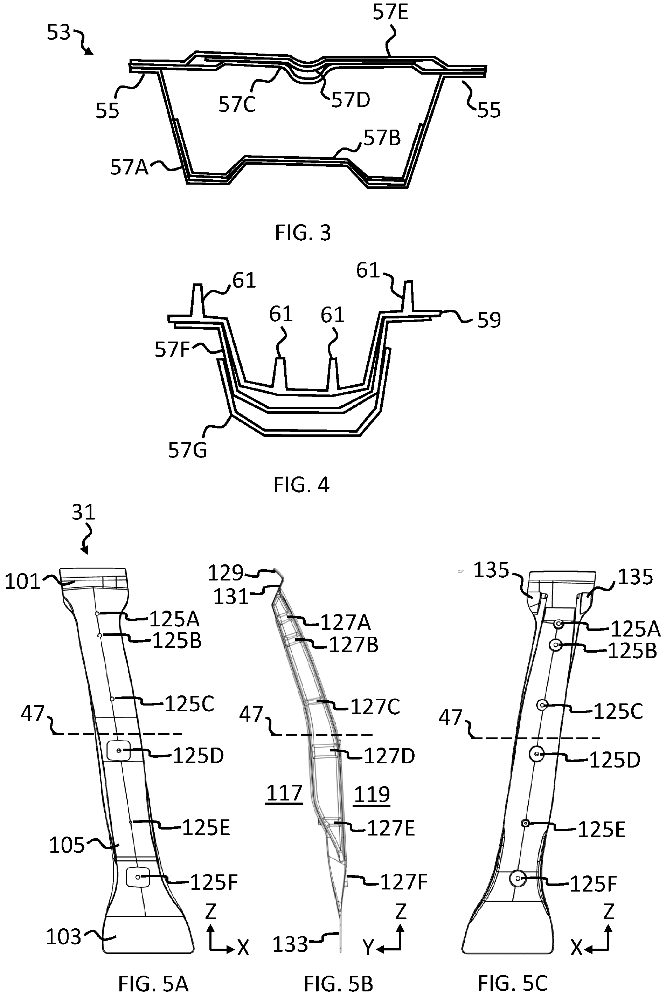

In traditional arts, vehicle frame components 5-45 have been constructed with box sections 53 (sometimes called hollow structural sections, HSSs) formed from multiple sheet-metal stampings 57A-E and joined at a pinch flange 55 by, for example spot welding or self-piercing rivets. FIG. 3 illustrates an example cross-section of one of said traditionally-constructed components. The multiple sheet-metal stampings 57A-E provide several layers of reinforcement for both resisting and absorbing impacts and for supporting connecting assemblies such as, in the case of a B-pillar 29, 31 for example, seat belt anchorage, seatbelt retractor, rear door hinges, check arm for rear door, front door latch (striker), and the like.

However, to form a box section 53 with sufficient reinforcements, a large number of sheet-metal stampings 57A-E are required. By way of example, in order to make a single sheet metal stamping 57A, sheet steel is taken off a coil, cut into rectangles, and put into a dedicated press tool for that specific stamping 57A. To make each of the multiple sheet-metal stampings 57A-E, an equal number of dedicated press tools are required. Then, in order to form the box section 53, each of these multiple sheet-metal stampings 57A-E will need to be joined. This joining is traditionally performed sequentially, where a first sheet-metal stamping 57A is joined to a second sheet-metal stamping 57B by spot welding and then a third sheet-metal stamping 57C is joined to these joined stampings 57A-B by spot welding and so on, and/or the stampings 57A-B, 57C-E are joined into subassemblies and then the subassemblies joined together. In either case, it is a multi-step process to join the sheet-metal stampings 57A-E into the box section 53.

Accordingly, between making and joining the multiple sheet-metal stampings 57A-E there are many dedicated tools and process steps are required. This is inefficient in terms of time and cost.

There are also large energy inefficiencies associated with the production of box sections 53. To make the sheet-metal in the first place requires melting and solidification of metal into a slab, followed later by re-heating until red-white hot. The slab is then repeatedly compressed via sets of rollers defining successively smaller gaps. By this process, an e.g., 10m long, 1m thick slab is worked until it is 1-2 mm thick and 2000m long. There are high energy costs in the heating and the degree of shape change that the metal slab undergoes. A significant amount of scrap material is also generated in making the sheet-metal stampings 57A-E which has an energy costs in terms of recycling (e.g., remelting). There is also energy cost for the multiple spot welds or for manufacturing and employing e.g., self-piercing rivets in order to join the multiple sheet-metal stampings 57A-E together.

One possible way to reduce the number of parts and assembly operations, and associated logistics and tooling, is to form vehicle frame components 5-45 from an integrative casting 59. FIG. 4 illustrates an example cross-section of an integrative casting 59 of one of said components 5-45. An integrative casting 57 is a casting in which not only the main body of a vehicle frame component 5-45 is cast, but also local reinforcements, which are traditionally provided by separate sheet-metal stampings, are also cast and are cast as one piece with the main body. The cast reinforcements do not however necessarily resemble those provided by separate sheet-metal stampings. The cast reinforcements may instead be provided by varying levels of thickness or relief structures such as ribs 61. This is possible because there is no fixed thickness to castings as there are with sheet-metal stampings.

However, for at least some of the vehicle frame components 5-45, the ductility of the integrative casting 59 may be insufficient. At least some of the vehicle frame components 5-45 are, for the purpose of maintaining relatively low mass, designed to allow for controlled bending to absorb impact energy and thus permit a limited amount of intrusion (deformation inboard), relying on the airbag system to protect occupants. The ductility of the integrative casting 59 may be insufficient to permit said amount of intrusion. At that amount of intrusion, the integrative casting 59 may fracture instead of yield. This is because the integrative casting 59 are typically large and would typically be formed through high-pressure die casting (HPDC). To enable filling the die with an alloy before the alloy begins to solidify at the flow front, the alloy will include high levels of silicon. This makes the alloys brittle and relatively weak compared to sheet-metal stampings. For example, the strain at which fracture occurs in cast aluminium is around 8% and the strength is around 100-150 MPa. In contrast, the strain at which fracture occurs for stamped aluminium is around 16% and the strength is around 160-200 MPa. Stamped steel offers further scope, with some suitable materials having yield strengths of about 400 MPa and fracture occurring at around 15% strain.

Accordingly, for at least some of the vehicle frame components 5-45, the use of an integrative casting 59 may need to be supplemented with separate sheet-metal stampings 57F-G to provide reinforcement as is shown in FIG. 4.

The present disclosure therefore provides a design for vehicle frame components 5-45 which is feasible to produce via forging and which is of sufficient strength and ductility and has sufficiently low mass. However, it will be appreciated that while this design has been conceived to enable production via forging, production of the design is not exclusively feasible with forging, nor are its advantages limited to the fact that it can be produced via forging. It will be appreciated that the design can be produced using a variety of manufacturing techniques and there is no intention to exclude existing or to-be-developed casting techniques which solve the issues with brittleness explained above. It will be also be appreciated that the design has multiple advantages which are inherent to the design and not the materials or process through which it is produced.

FIG.s 5A-G illustrates an example of a pillar for a vehicle 1 which is based on said design for vehicle frame components 5-45. Specifically, FIG.s 5A-G illustrates an example of the right B-pillar 31 of the vehicle 1; however, it will be appreciated that the features and characteristics of the right B-pillar 31 which will be herein described can be applied to any vehicle pillar, not least the left B-pillar 29, both A-pillars 15, 17, both C-pillars 33, 35 and any D-pillars 43, 45.

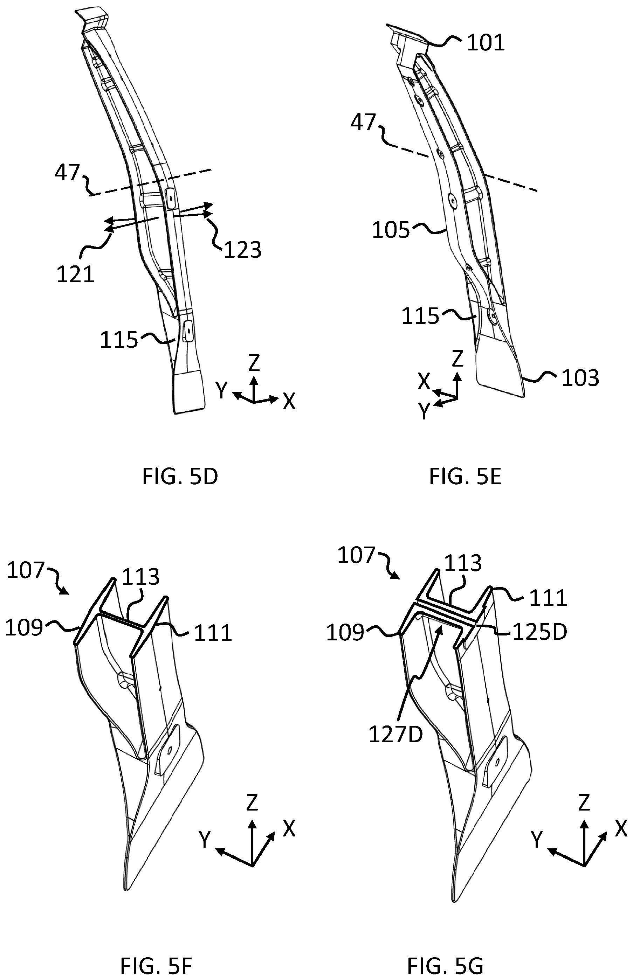

FIG. 5A illustrates a view of the example right B-pillar 31 as if seen from the left, and thus from a presumptive outboard 119 position, looking along the +Y direction. FIG. 5B illustrates a view of the example right B-pillar 31 as if seen from a rearward position, looking along the +X direction. FIG. 5C illustrates a view of the example right B-pillar 31 as if seen from the right, and thus from a presumptive inboard 117 position, looking along the -Y direction. FIG. 5D illustrates a view of the example right B-pillar 31 as if seen from a position both left (presumptively outboard 119) and rearwards. FIG. 5E illustrates a view of the example right B-pillar 31 as if seen from a position both right (presumptively inboard 117) and rearwards. FIG. 5F illustrates a sectional view of the example right B-pillar 31 as if cut away along a first plane and as if seen from a position both left (presumptively outboard 119), rearwards, and slightly elevated. FIG. 5G illustrates another sectional view of the example right B-pillar 31 as if cut away along a second, different plane and as if seen from the same position both left (presumptively outboard 119), rearwards, and slightly elevated.

The right B-pillar 31 comprises a first mounting portion 101 for mounting the right B-pillar 31 to a roof structure 27 of the vehicle 1. In this example the first mounting portion 101 is configured to mount to a cantrail 21. In some but not necessarily all examples the first mounting portion 101 has a profile comprising two faces 129, 131 bent at an angle to one another which conform to two faces of the cantrail 21 enabling multiple spot welds, rivets, bolts, or flow-drill screws or a relatively long continuous weld bead, for example, therebetween to provide a secure fixing. The first mounting portions 101 of other pillars may be similarly configured to mount to a cantrail 19, 21. In some, but not necessarily all examples the first mounting portions 101 of A-pillars 15, 17 may be configured to mount additionally or alternatively to the front header 23.

The right B-pillar 31 comprises a second mounting portion 103 for mounting the right B-pillar 31 to a lower body structure 49 of the vehicle 1. In this example the second mounting portion 103 is configured to mount to a sill 11. In some but not necessarily all examples the second mounting portion 103 has a profile comprising a broad face 133 conforming to an outboard-facing face of the sill 11 enabling multiple spot welds, rivets, bolts, or flow-drill screws or a relatively long continuous weld bead, for example, therebetween to provide a secure fixing. The second mounting portions 103 of other pillars may be similarly configured to mount to a sill 9, 11 or other lower body structures 49. In some but not necessarily all examples the second mounting portions 103 of A-, B-, and C-pillars 15, 17, 29, 31, 33, 35 are configured to mount to laterally disposed longitudinal rails such as the sills 9, 11 or front rails 5, 7 in at least some examples of A-pillars 15, 17 or rear rails 37, 39 in at least some examples of C-pillars 33, 35. In some but not necessarily all examples the second mounting portions 103 of D-pillars 43, 45 are configured to mount to the rear rails 37, 39 or the rear cross-member 41.

The right B-pillar 31 comprises a monolithic beam 105 spanning between the first and second mounting portions 101, 103. Reference of "monolithic" is to the beam 105 as consisting of a single piece of material, for example a forged part, rather than an assembly of multiple parts. It will however be appreciated that the monolithic beam 105 can be produced by any process suitable for creating a monolithic part with a non-uniform profile and that forging is not the only such process available in the art.

The monolithic beam 105 has an I-shaped cross-section 107 along at least a portion of its length. At least 30% of its length may have an I-shaped cross-section 107. In some but not necessarily all examples the monolithic beam 105 has an I-shaped cross-section 107 along a majority of its length.

The I-shaped cross-section 107 is an efficient shape in terms of mass to bending stiffness for pillars which are predominantly loaded by unidirectional impacts because the I-shaped cross-section 107 can distribute most of the material away from the unidirectional impact bending neutral axis.

The I-shaped cross-section 107 is provided by a first flange 109, a second flange 111, and a web 113. The I-shaped cross-section 107 is oriented relative to the mounting portions 101, 103 such that the web 113 is oriented in an inboard 117-to-outboard 119 direction when the right B-pillar 31, or equivalently any other of the vehicle pillars, is mounted to the vehicle 1. The first flange 109 is therefore disposed to the inboard 117 side of the web 113 and the second flange 111 is therefore disposed to the outboard 119 side of the web 113. Impact energy that the pillars are designed to absorb will typically be along an outboard 119-to-inboard 117 direction because the pillars are designed to control intrusion (deformation inboard 117) in response to external (originating outboard 119) impacts. In the case of B-pillars 29, 31 the web 113 may be oriented in a lateral direction (e.g., in Y) when mounted to the vehicle 1. In the case of other vehicle pillars, the predominant direction of impacts may have, for example, both lateral (e.g., in Y) and longitudinal (e.g., in X) components and the web 113 of those pillars may therefore be oriented neither wholly laterally nor wholly longitudinally when mounted to the vehicle 1. Given pillars are laterally-disposed frame components, they are designed with an expectation of side-impacts in mind and thus the orientation of the web 113 in a pillar will have at least a lateral component. In general, the web 113 can be oriented along the direction of expected impact energies. This ensures that most bending loads will be directed into attempting hardway bending of the monolithic beam 105 about its (strong) axis 121 (the axis normal to the web 113) rather than into attempting easyway bending of the monolithic beam 105 about its (weak) axis 123 (the axis parallel to the web 113).

In some but not necessarily all examples at least the portion of the monolithic beam 105 having the I-shaped cross section 107 comprises a curve about the (strong) axis 121. The mounting portions 101, 103 are configured to mount the pillar to the vehicle 1 with a convex side of said curve facing outboard 119 of the vehicle 1. The second flange 111 provides the convex side of said curve. This enables a wider (in Y) lower body structure 49 to provide greater space for occupants, suspension, powertrains, and the like alongside a narrower (in Y) greenhouse 51 to minimise the vehicle frontal cross-sectional area for drag reduction.

It will be appreciated that the dimensions of the I-shaped cross-section 107 may vary along the length (e.g., approximately in Z) of the monolithic beam 105. For example, in some but not necessarily all examples the depth (e.g., Y dimension) of the monolithic beam 105, and thus of the I-shaped cross section 107, tapers towards the first mounting portion 101. In the example of the right B-pillar 31 in FIG.s 5A-G, the depth of the monolithic beam 105 tapers continually from the prospective beltline 47 of the vehicle 1 towards the first mounting portion 101.

FIG.s 6A-G illustrate how the I-shaped cross section 107 may transition into the first mounting portion 101. Each of FIG.s 6A-G illustrate a cross-sectional view of the example right B-pillar 31.

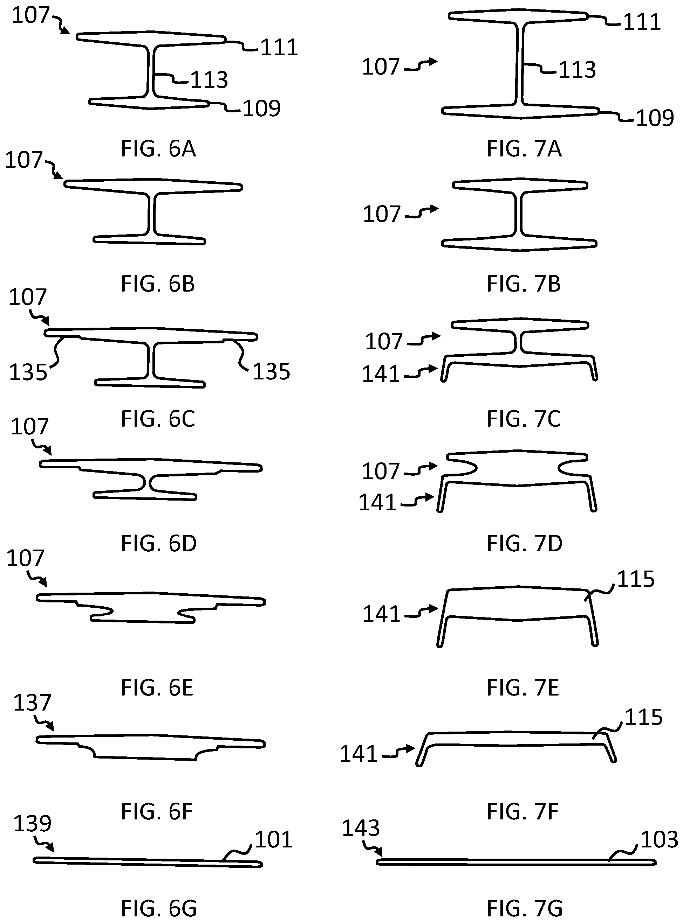

The cross section of FIG. 6A is the closest of these to the prospective beltline 47. FIG. 6G is a cross section of the first mounting portion 101.

From FIG. 6A to FIG. 6C it can be seen that the second flange 111 progressively increases in width (e.g., in X) while the depth (e.g., in Y) of the web 113 progressively decreases.

From FIG. 6C to FIG. 6E it can be seen that second flange 111 continues to widen (e.g., in X) and the depth (e.g., in Y) of the web 113 decreases such that the two flanges 109, 111 begin to merge, with the thickness (e.g., in X) of the web 113 increasing during the merger.

In FIG. 6F it can be seen that the two flanges 109, 111 have merged into a merged cross section 137 which no longer comprises an I-shape 107.

Between FIG. 6C and FIG. 6E the presence of two flat areas 135 on the second flange 111 can be observed. These two flat areas 135, close to the first mounting portion 101, may be used to join to pinch flanges of the cantrail 21 to supplement the aforementioned secure fixing via the first mounting portion 101. These may not be present in all examples.

From FIG. 6F to FIG. 6G it can be seen that the cross section thins out (e.g., in Y) and flattens into a flat plate 139 which is the cross section of the first mounting portion 101 and, for example, provides the two faces 129, 131 for conforming to the cantrail 21.

It can be seen through the progression from FIG. 6A to FIG. 6G that the second flange 111 widens while the first flange 109 converges onto and merges with the second flange 111 to create a flattened, flared portion that functions as the first mounting portion 101. In some but not necessarily all examples the first flange 109 maintains a consistent width (e.g., in X) or narrows (e.g., in X) while undergoing the convergence and merger.

In some but not necessarily all examples the depth (e.g., Y dimension) of the monolithic beam 105 tapers towards the second mounting portion 103.

FIG.s 7A-G illustrate how the I-shaped cross section 107 may transition into the second mounting portion 103. Each of FIG.s 7A-G illustrate a cross-sectional view of the example right B-pillar 31.

The cross section of FIG. 7A is a cross section at the prospective beltline 47. In comparison to FIG. 6A it can be seen that the width (e.g., in X) of the first flange 109 and the depth (e.g., in Y) of the web 113 are greater, indicating that the cross section of FIG. 6A is already part of the taper towards the first mounting portion 101. FIG. 7G is a cross section of the second mounting portion 103.

From FIG. 7A to FIG. 7B it can be seen that the depth (e.g., in Y) of the web 113 decreases.

From FIG. 7B to FIG. 7C it can be seen that the first flange 109 diverges from a first side (prospective inboard 117 side) of the monolithic beam 105 and converges onto the second flange 111 at a second side (prospective outboard 119 side) of the monolithic beam 105, thus continuing the decrease in the depth (e.g., in Y) of the web 113. This divergence transforms the profile of first flange 109 of the I-shaped cross section 107 into a C-shape 141. The cross section of the monolithic beam 105 therefore transitions from wholly I-shaped 107 into a union of I-shaped and C-shaped profiles such that the cross section comprises an I-shaped portion 107 and a C-shaped portion 141.

From FIG. 7C to FIG. 7D the depth (e.g., in Y) of the web 113 decreases such that the two flanges 109, 111 begin to merge, with the thickness (e.g., in X) of the web 113 increasing during the merger. The depth of (e.g., in Y) of the C-shaped portion 141 of the cross section also increases, which in some but not necessarily all examples maintains the overall depth (e.g., in Y) of the monolithic beam 105.

In FIG. 7E it can be seen that the two flanges 109, 111 have merged so that the cross section of the monolithic beam 105 in a portion 115 adjacent to the second mounting portion 103 no longer comprises an I-shape 107. Instead, the portion 115 of the monolithic beam 105 adjacent to the second mounting portion 103 has a C-shaped cross section 141.

From FIG. 7E to FIG. 7F the width (e.g., in X) of the C-shaped cross section 141 increases while its depth (e.g., in Y) decreases. For example, a base of the C-shaped cross section 141 thins out (e.g., in Y) and widens (e.g., in X), flanges of the C-shaped cross section 141 shorten (e.g., in Y), and interior angles between the base and the flanges become more obtuse.

From FIG. 7F to FIG. 7G it can be seen that the cross section thins out (e.g., in Y) and flattens into a flat plate 143 which is the cross section of the second mounting portion 103 and, for example, provides the broad face 133 for conforming to the outboard-facing face of the sill 11.

It can be seen through the progression from FIG. 7A to FIG. 7G that the monolithic beam 105 transitions from an I-shaped cross section 107 via a C-shaped cross section 141 into a flattened, flared portion that functions as the second mounting portion 103. The transition via the C-shaped cross section 141 creates additional available packaging space near the base of the B-pillar 31, where it mounts to the sill 11. This additional packaging available packaging space is utilisable for packaging the seatbelt retractor, for example. Furthermore, the C-shaped cross section 141 has less bending stiffness than the I-shaped cross section 107, but greater bending stiffness than the flat plate 143. The transition via the C-shaped cross section 141 therefore helps to induce more controlled bending at the base of the pillar where it is expected that the greatest bending loads will be concentrated, and thus avoids fracture under those loads.

In some but not necessarily all examples at least one of the first or second mounting portions 101, 103 are integrally formed with the monolithic beam 105. That is, the mounting portions 101, 103 and the beam spanning 105 between them are a single monolithic part with a non-uniform profile. This reduces the number of parts and assembly operations and associated logistics and tooling. In some but not necessarily all other examples one of the first or second mounting portions 101, 103 comprises secondary structural elements to supplement the single monolithic part's ability to provide controlled bending without fracture at the ends of the monolithic beam 105 where the greatest bending loads may be concentrated. However, the transitions described in relation to FIG.s 6A-G and FIG.s 7A-G are designed to enable controlled bending without fracture to be achieved by monolithic part alone.

It will be appreciated that the transitions described in relation to FIG.s 6A-G and FIG.s 7A-G are only possible examples and that other cross-sectional shape transitions can enable controlled bending without fracture. In general, if the desired shape of the B-pillar 31, or other frame component 5-45, after controlled deformation is known, then the shape and dimensions of its cross-section can be tailored. This may be done at a finite number of sections along its length, after which smooth, linking, transition shapes can be constructed between each of those finite sections. The smooth, linking, transition shapes avoid step changes which can create local stress concentrations and buckle or bend initiators that detract from the general strength of the B-pillar 31, or other frame component 5-45. Thus, the B-pillar 31, or other frame component 5-45, can be tailored to have a constant radius of bending, or to bend more at one location along its length than others. Either may be desirable in different circumstances. Whatever desired shape after deformation, consideration should also be given to controlling the stresses experienced by the material furthest from the bending axis so that there is no disproportionate tendency to fracture at one particular section. For example, increasing the depth of the web 113 of an I-shaped cross section 107 increases stiffness, which can re-direct bending moment energy to adjacent less stiff sections, but also increases the distance between the furthest material in the flanges 109, 111 and the bending axis and so will increase the stress that particular section sees. An alternative way of increasing stiffness is to thicken or widen the flanges 109, 111, which involves less increase in stress than increasing the web 113 depth. Thickening the flanges 109, 111 can also be advantageous if compression is expected along the length of the B-pillar 31, or other frame component 5-45. This could arise, for example, along a pillar in the case of roof crush or along the side of the pillar which is in compression during bending.

Returning to FIG.s 5A-G, it can be seen that the monolithic beam 105 can comprise mounting locations 125A-F for connecting assemblies such as, in the example of the B-pillar 31, seat belt anchorage, seatbelt retractor, rear door hinges, check arm for rear door, front door latch (striker), and the like. The mounting locations 125A-F can comprise holes formed in the monolithic beam 105. The holes may be through holes or blind holes. They may be threaded or not. Forged aluminium or steel is strong enough to be threaded and take bolt loads directly, unlike high pressure die cast aluminium which is too soft and risks thread stripping.

In the illustrated example the holes are oriented parallel to the (weak) axis 123 of the monolithic beam 105; however in other examples the holes may be oriented parallel to the (strong) axis 121 of the monolithic beam 105 and may extend through the web 113 in a direction normal to the web 113. In the illustrated example at least some of the holes extend through both flanges 109, 111; however in other examples the holes may extend through only one of the flanges 109, 111. In the illustrated example at least some of the holes are coplanar with the web 113; however in other examples the holes may be parallel with but offset from the web 113.

In conjunction with the mounting locations 125A-F, the monolithic beam 105 may comprise integrally formed reinforcement structures 127A-F. At least some of the integrally formed reinforcement structure 127A-F comprise a portion of the web 113 with increased thickness, through which, for example, a hole oriented along the (strong) axis 121 can extend. The web 113 thus provides tubular reinforcement structures 127A-E for the mounting locations 125A-E. At least some of the integrally formed reinforcement structure 127A-F can comprise a portion of the second flange 111 with increased thickness. The increased thickness of portions of the second flange 111 may also provide a flat mating surface for connecting assemblies such as the door hinges, as surround the mounting locations 125D and 125F.

In some but not necessarily all example, at least some of the vehicle frame components 5-45 can be formed as monolithic beams 105 comprising an I-shaped cross section 107 along at least a portion of its length. Suitable ones will include those for which the expected bending loads will be predominantly unidirectional. Examples may include: vehicle pillars, which are unlikely to experience bending loads other than from side impacts and certain cross members, such as the bulkhead cross member 13, the front header 23, or the rear header 25, each of which are expected to experience minimal side impact loads.

The cross members 13, 23, 25 may comprise a first mounting portion 101 for mounting to a first laterally-disposed frame component of the vehicle 1 and a second mounting portion 103 for mounting to a second laterally-disposed frame component of the vehicle 1. The first and second laterally-disposed frame components being disposed on different lateral sides (left and right) of the vehicle 1. A monolithic beam 105 spans between the first and second mounting portions 101, 103 and has an I-shaped cross-section 107 along at least a portion of its length.

In some but not necessarily all examples, the cross member's monolithic beam 105 has an I-shaped cross-section 107 along a majority of its length.

In some but not necessarily all examples, the cross member's first and/or second mounting portions 101, 103 are integrally formed with its monolithic beam 105.

In some but not necessarily all examples, the cross member's monolithic beam 105 comprises one or more integrally formed reinforcement structures 127A-F at one or more mounting locations 125A-F for connecting assemblies. At least one integrally formed reinforcement structure 127A-F comprises a portion of a web 113 of the I-shaped cross-section 107 with increased thickness.

In some but not necessarily all examples, a depth of the cross member's monolithic beam 105 tapers towards or from the first mounting portion 101 and/or tapers towards or from the second mounting portion 103.

The bulkhead cross member 13 may specifically comprise a monolithic beam 105 spanning between first and second mounting portions 101, 103 for mounting to the left front rail 5A, 5B and right front rail 7A, 7B respectively or for mounting to lower sections of the left A-pillar 15 and right A-pillar 17 respectively. Its monolithic beam 105 may be I-shaped along a majority of its length. A portion of its monolithic beam 105 which is adjacent one or both of its mounting portions 101, 103 may not be I-shaped. The I-shape may transition into a C-shape in a similar way as shown in FIG.s 7A-G. The mounting portions 101, 103 are configured to mount it to the vehicle 1 with a web 113 of its monolithic I-beam oriented along an inboard-to-outboard direction, which in light of its position in the vehicle is a fore-aft direction (+/- X). The monolithic beam has integrally formed reinforcement at mounting locations for pedalbox fixings, a heating, ventilation and air conditioning (HVAC) system, and the steering column. Where the mounting portions 101, 103 are for mounting to lower sections of the A-pillars 15, 17, the monolithic beam 105 may have a socket to accept a rear of the left front rail 5A, 5B and a socket to accept a rear of the right front rail 7A, 7B. Additionally or alternatively the forward flange 111 may have extra reinforcement to support the rear of the left front rail 5A, 5B and the rear of the right front rail 7A, 7B resting against it.

The front header 23 may specifically comprise a monolithic beam 105 spanning between first and second mounting portions 101, 103 for mounting to the left and right cantrails 19, 21 respectively. The monolithic beam 105 may be I-shaped along a majority of its length. In some examples, it may be I-shaped for the full span between the mounting portions 101, 103. The mounting portions 101, 103 are configured to mount it to the vehicle 1 with a web 113 of the monolithic I-beam oriented vertically (+/- Z). The monolithic I-beam curve about its (strong) axis 121 (the axis normal to the web 113). In some examples, the monolithic I-beam may also have some (weak) axis 123 (the axis parallel to the web 113) curvature. The monolithic beam 105 has integrally formed reinforcement at mounting locations for sunvisor fixings and electronic module attachments.

The rear header 25 may specifically comprise a monolithic beam 105 spanning between first and second mounting portions 101, 103 for mounting to the left and right cantrails 19, 21 respectively. In some examples, it may be I-shaped for the full span between the mounting portions 101, 103. The mounting portions 101, 103 are configured to mount it to the vehicle 1 with a web 113 of the monolithic I-beam oriented vertically (+/- Z). The monolithic I-beam curve about its (strong) axis 121 (the axis normal to the web 113). In some examples, the monolithic I-beam may also have some (weak) axis 123 (the axis parallel to the web 113) curvature. The monolithic beam 105 has integrally formed reinforcement at mounting locations for tailgate hinge fixings. Either the monolithic beam 105 or the mounting portions 101, 103 may comprise tapped holes with axes parallel to the path of the beam 105 for mounting to, for example, the left and right D-pillars 43, 45.

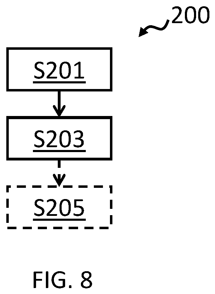

FIG. 8 illustrates an example of a method 200 of fabricating a vehicle frame component 5-45 as a monolithic part.

Step S201 comprises a single forging of the monolithic part.

The monolithic part may be forged from metals such as steel or aluminium.

The forging may be hot-forging. To reduce subsequent machining of the forged, monolithic part, it may be beneficial for that many, if not all, areas of the forging to have only small amounts of dimensional part-to-part variability, typically about +/- 0.5 mm or less, for which hot press forging with impression dies is suitable. Therefore, in some but not necessarily all examples the forging may be hot press forging with impression dies.

The forging shapes at least a portion of the monolithic part into a beam 105 having an I-shaped cross section 107.

The forging may shape each end on the monolithic part into flat plates 139, 143 suitable for use as mounting portions 101, 103.

The forging may shape portions of the monolithic part where future mounting locations 125A-F for connecting assemblies may be machined into reinforcement structures 127A-F for those mounting locations 125A-F.

The method 200 may comprise Step S203 which comprises machining of the forged, monolithic part. In some examples step S203 may comprise machining one or more mounting locations 125A-F for connecting assemblies into the forged, monolithic part. This can comprise drilling, boring, or tapping holes in the forged, monolithic part to produce the vehicle frame component 5-45. In some examples, step S203 may comprise, additionally or alternatively, machining the first and second mounting portions 101, 103 either to produce parallel surfaces on either side of the mounting portions 101, 103 for bolting, or to make the material thin enough for spot welding or self-piercing riveting. For vehicle frame components 5-45 which do not mount any connecting assemblies and/or for which machining of the first and second mounting portions 101, 103 is not required, step S203 is omitted.

Additional steps such as cleaning and surface coating the forged, monolithic part may be performed as part of the method 200.

In some but not necessarily all examples the method 200 may be extended to incorporate mounting the vehicle frame component 5-45 to other vehicle frame components 5-45 or the body structure 3 as a whole.

In such examples the method 200 may comprise step S205 in which the mounting portions 101, 103 are fixed to respective other vehicle frame components 5-45, for example by welding, riveting, bolting, or other suitable means.

In the case of a vehicle pillar, the first mounting portion 101 is fixed to frame component 19-25 in or intended for the roof structure 27 of the vehicle 1 and the second mounting portion 103 is fixed to frame component 5A-13, 37A-41 in or intended for the lower body structure 49 of the vehicle 1.

It will be appreciated that machining the one or more mounting locations 125A-F for connecting assemblies into the forged, monolithic part (step S203) could be performed after the mounting portions 101, 103 are fixed to respective other vehicle frame components 5-45 (step S205).

It will be appreciated that various changes and modifications can be made to the present invention without departing from the scope of the present application.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A pillar for a vehicle comprising:
a first mounting portion for mounting the pillar to a roof structure of the vehicle;
a second mounting portion for mounting the pillar to a lower body structure of the vehicle; and
a monolithic beam spanning between the first and second mounting portions
wherein the monolithic beam has an I-shaped cross-section along at least a portion of its length.

2. The pillar of claim 1, wherein the monolithic beam has an I-shaped cross-section along a majority of its length.

3. The pillar of claim 1 or claim 2, wherein a cross section of the monolithic beam in a portion adjacent the second mounting portion is not I-shaped.

4. The pillar of claim 3, wherein a cross section of the monolithic beam transitions from I-shaped to not I-shaped via divergence of a first flange from a first side of the monolithic beam and convergence of the first flange onto a second flange at a second side of the monolithic beam.

5. The pillar of any preceding claim, wherein the mounting portions are configured to mount the pillar to the vehicle with a web of the I-shaped cross-section oriented in an inboard-outboard direction of the vehicle.

6. The pillar of claim 5, wherein the portion of the monolithic beam having the I-shaped cross section comprises a curve about an axis normal to the web, and wherein the mounting portions are configured to mount the pillar to the vehicle with a convex side of said curve facing outboard of the vehicle.

7. The pillar of any preceding claim, wherein the monolithic beam is a forged part.

8. The pillar of any preceding claim, wherein the first and/or second mounting portions are integrally formed with the monolithic beam.

9. The pillar of any preceding claim, wherein the monolithic beam comprises one or more integrally formed reinforcement structures at one or more mounting locations for connecting assemblies.

10. The pillar of claim 9, wherein at least one integrally formed reinforcement structure comprises a portion of a web of the I-shaped cross-section with increased thickness.

11. The pillar of any preceding claim, wherein a depth of the monolithic beam tapers towards the first mounting portion and/or tapers towards the second mounting portion.

12. The pillar of any preceding claim, wherein the pillar is a B-pillar, the roof structure is a cantrail, and the lower body structure is a sill.

13. A body structure for a vehicle comprising the pillar of any preceding claim.

14. A vehicle comprising the pillar of any of claims 1 to 12.

15. A method of fabricating the pillar of any of claims 1 to 12, comprising a single forging.
